# EUROPÄISCHE PATENTANMELDUNG

(11) **EP 3 700 130 A1**
(43) Veröffentlichungstag der Anmeldung: **26.08.2020**
(21) Anmeldenummer: 19158486.1
(22) Anmeldetag: 21.02.2019
(51) Int. Cl.: H04L 12/24, G05B 19/418, H04L 12/46, H04L 29/08, H04L 12/40

(54) **VERFAHREN ZUR DATENÜBERTRAGUNG, GERÄT, COMPUTERPROGRAMM UND COMPUTERLESBARES MEDIUM**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Verfahren zur Datenübertragung in einem Netzwerk (1), das in zwei oder mehr Teilnetzwerke (2-5) unterteilt ist, wobei für wenigstens ein Paar von zwei in verschiedenen hierarchischen Ebenen (6, 7) liegenden Teilnetzwerken (2-5) gilt, dass diese über einen Koppel-Netzwerkknoten (8-10) verbunden sind, wobei in einem dieser Teilnetzwerke, Quell-Teilnetzwerk (2), geschützte Verbindungen (V1, V2) eingerichtet sind, über die jeweils von einem Sender (T1, T2) stammende und für verschiedene Empfänger (L1-L5) bestimmte Datenpakete (STL1-STL5), die jeweils einen einem Empfänger (L1-L5) zugeordneten Paket-Kenner umfassen, periodisch übertragen werden, wobei von dem Koppel-Netzwerkknoten (8-10) Datenpakete (STL1-STL5) in das Ziel-Teilnetzwerk (3-5) weitergeleitet und in diesem über eine gemeinsame geschützte Verbindung (V3) übertragen werden, wobei eine Filterung von Datenpaketen (STL1-STL5) anhand der Paket-Kenner erfolgt, und die Filterung derart ist, dass für wenigstens eine der geschützten Verbindungen (V1, V2) aus dem Quell-Teilnetzwerk (2) gilt, dass von den zu dieser gehörigen Datenpaketen (STL1-STL5) nur die für einen Teil der zu dieser gehörenden Empfänger (L1-L5) bestimmten Datenpakete (STL1-STL5) in das Ziel-Teilnetzwerk (3-5) weitergeleitet werden. Darüber hinaus betrifft die Erfindung ein Gerät (8-10), ein Computerprogramm und ein computerlesbares Medium.

## Beschreibung

Die Erfindung betrifft ein Verfahren zur Datenübertragung in einem insbesondere industriellen Netzwerk. Darüber hinaus betrifft die Erfindung ein Gerät zur Durchführung eines solchen Verfahrens, ein Computerprogramm und ein computerlesbares Medium.

In der IEEE sind durch die Erweiterungen der Arbeitsgruppe TSN (Time-Sensitive Networking) periodische bzw. zyklische Übertragungen, so genannte Streams, im Netzwerk besonders geschützt. Die TSN-Arbeitsgruppe (Time Sensitive Networking Taskgroup) ist dabei eine Nachfolgegruppe der AVB-Arbeitsgruppe (Audio/Video Bridging Taskgroup). Zu TSN gehört eine Vielzahl von Standards, rein beispielhaft sei in diesem Zusammenhang genannt Zeitsynchronisation (IEEE 802.1 AS-REV), Framepreemption (IEEE 802.1 Qbu) und Reservierung (IEEE 802.1 Qca, IEEE 802.1 Qcc). Bekannt ist auch das Stream Reservation Protocol (SRP, siehe insbesondere IEEE 802.1 Qat), mit dem Übertragungsressourcen dynamisch reserviert werden können und es möglich wird, Latenzzeiten zu garantieren. Durch eine automatische Konfiguration von SRP kann für Streams mit einer erfolgreichen Reservierung insbesondere eine gesicherte Übertragung innerhalb einer bestimmten Maximalen Latenz garantiert werden.

Ein Sender wird im Rahmen von AVB bzw. TSN auch als Talker und ein Empfänger als Listener bezeichnet.

In der industriellen Automatisierungstechnik wird Ethernet ebenfalls für die Kommunikation verwendet. Die Datenübertragung erfolgt dabei in periodischen Zyklen. Um eine größere Datenmenge übertragen zu können, wurde von PROFINET eine Untersetzung eingeführt. PROFINET (process field network) ist dabei der offene Industrial-Ethernet-Standard der PROFIBUS-Nutzerorganisation e. V. (PNO) für die Automatisierung. In den periodischen Daten steckt bei PROFINET die Frame-ID zur Identifizierung der jeweils enthaltenen Daten. Im Netzwerk selbst ist keine weitere Unterscheidung der Daten notwendig - sie werden an das jeweilige Zielgerät gesendet und dort ausgewählt. Bei mehreren Quellen der Daten erfolgt eine Auswertung am Endgerät.

In PROFINET wird eine hohe Priorität bei der Datenübertragung verwendet. Eine Ressourcenprüfung und Reservierung im Netzwerk erfolgt nicht. Es kann dadurch zu Ausfällen bei Überlast durch andere Anwendungen oder andere PROFINET-Projekte im Netzwerk kommen. Nach Kenntnisstand der Anmelderin ist es bisher Aufgabe des Anwenders, dies im jeweiligen Netzwerk zu verhindern.

Bei AVB/TSN wird ebenfalls eine bevorzugte Behandlung beim Senden verwendet. Solange die reservierten Streams innerhalb ihrer Reservierung liegen, erfolgt eine bevorzugte Behandlung intern mit der höchsten Priorität. Durch das Reservierungsprotokoll wird eine Ressourcenzuteilung im Gerät durchgeführt und somit eine mögliche Überlastung ausgeschlossen.

Damit AVB/TSN die Garantien treffen kann, wurden Stream-Klassen eingeführt. Jeder Stream beschreibt seine Datenmenge innerhalb der von der Klasse definierten Intervalls. Durch die Klassenbeschreibung ist eine Überlagerung von mehreren Klassen mit unterschiedlichen Intervallen und eine Latenzberechnung durch die Betrachtung der maximal möglichen Last möglich. Anhand der Latenzberechnung kann auch die benötigte Queuetiefe berechnet und die Übertragung garantiert werden.

In der ebenfalls auf die Anmelderin zurückgehenden EP 3 432 097 A1 ist ein Mechanismus für eine effektive Abbildung von den Daten mehrerer Sender auf einen Stream offenbart. Auch eine Übertragung der Daten von einem Sender an mehrere Empfänger in einem Stream ist beschrieben. Bei der Datenübertragung wird ein Multiplexing durchgeführt, es werden jeweils Datenpakete von verschiedenen Sendern im gleichen Stream übertragen. Die von verschiedenen Stream-Teilnehmern stammenden bzw. die für verschiedene Stream-Teilnehmer bestimmten Datenpakete/-frames eines Streams können dann auch als Streamlets betrachtet und bezeichnet werden. Zur Identifikation des eigentlichen Empfängers kann zusätzlich eine ID in den Datenpaketen enthalten sein, die insbesondere durch den (jeweiligen) Sender eingefügt wurde. Auch eine Längeninformation wird vorteilhafter Weise hinzugefügt. Die ID kann z.B. bei PROFINET die Frame-ID sein. Bei Feldbussystemen existieren für die einzelnen Empfänger ohnehin meist eindeutige IDs, die dann als (Streamlet-)ID im Streamlet verwendet werden können. Jeder Sensor bzw. Aktor sendet bzw. empfängt dann Daten in Form eines Streamlets in einem Stream. Dadurch können die von unterschiedlichen Teilnehmern stammenden oder für unterschiedliche Teilnehmer bestimmten Daten gemeinsam in einem Stream - jeweils zeitlich versetzt zueinander - übertragen werden. Durch die Sammlung von vielen Daten in einem Stream erfolgt eine deutlich effizientere Netzwerkauslastung im Vergleich zur Verwendung von einem Stream pro Gerät mit jeweils eigener Weiterleitung und Ressourcenreservierung aber nicht ausgenutzter Bandbreite.

In typischen industriellen Netzwerken ist die Linkspeed auf 100 Mbit/s begrenzt. Bei schnellen Netzwerkzyklen mit geringer Latenz können so nur sehr wenige Streams reserviert werden. Zudem ist die Paketgröße begrenzt.

Die Anmelderin geht davon aus, dass es bei dem Empfang von Daten, die in einem Machine-Level Netzwerk (in der Regel höhere Linkspeed) innerhalb mehrerer Streams übertragen werden, um die Bandbreite besser ausnutzen zu können, bei der Reservierung im Field-Level zu einem Ressourcenengpass kommt. Bei einem Machine-Level Netzwerk handelt es sich im industriellen Bereich, etwa dem Netzwerk einer industriellen Anlage, in der Regel um ein vergleichsweise leistungsfähiges übergeordnetes Teilnetzwerk, dem eines oder mehrere weitere auf dem Feldlevel befindliche Teilnetzwerke, die auch als Subnetzwerke bezeichnet werden können, unterlagert sind.

Die Aufgabe der vorliegenden Erfindung besteht darin, ein Verfahren zur Datenübertragung zu schaffen, über das mit vernünftigem Aufwand eine geschützte Kommunikation zwischen beteiligten Endgeräten insbesondere auch für solche Fälle möglich ist, in denen Daten aus einem Maschinen-Level- in wenigstens ein Field-Level-Teilnetzwerk zu übertragen sind. Darüber hinaus ist es eine Aufgabe der vorliegenden Erfindung, ein Gerät zur Durchführung eines solchen Verfahrens anzugeben.

Die erstgenannte Aufgabe wird gelöst durch ein Verfahren zur Datenübertragung in einem insbesondere industriellen Netzwerk, das in zwei oder mehr Teilnetzwerke, die auf zwei oder mehr hierarchische Ebenen des Netzwerkes verteilt sind, unterteilt ist, wobei für wenigstens ein Paar von zwei in verschiedenen hierarchischen Ebenen liegenden Teilnetzwerken gilt, dass diese über einen Koppel-Netzwerkknoten verbunden sind, wobei in einem dieser beiden Teilnetzwerke, Quell-Teilnetzwerk, wenigstens zwei geschützte Verbindungen eingerichtet sind, über die jeweils von einem Sender stammende und für verschiedene Empfänger bestimmte Datenpakete, die jeweils einen einem Empfänger zugeordneten Paket-Kenner umfassen, periodisch übertragen werden, wobei von dem Koppel-Netzwerkknoten Datenpakete von wenigstens zwei der geschützten Verbindungen in das Ziel-Teilnetzwerk weitergeleitet und in diesem über eine gemeinsame geschützte Verbindung übertragen werden, wobei durch den Koppel-Netzwerkknoten eine Filterung von Datenpaketen anhand der Paket-Kenner erfolgt, und die Filterung derart ist, dass für wenigstens eine der geschützten Verbindungen aus dem Quell-Teilnetzwerk gilt, dass von den zu dieser gehörigen Datenpaketen nur die für einen Teil nicht jedoch alle der zu dieser gehörenden Empfänger bestimmten Datenpakete in das Ziel-Teilnetzwerk weitergeleitet werden.

Die zweitgenannte Aufgabe wird gelöst durch ein Gerät zur Durchführung des Verfahrens nach einem der vorhergehenden Ansprüche, das ausgebildet und/oder eingerichtet ist, um zwei Teilnetzwerke miteinander zu verbinden und um Datenpakete, die über wenigstens zwei in dem einen Teilnetzwerk, Quell-Teilnetzwerk, eingerichtete geschützte Verbindungen an dem Gerät ankommen, und die jeweils einen Paket-Kenner umfassen, zu empfangen, und um empfangene Datenpakete der wenigstens zwei geschützten Verbindungen in das andere Teilnetzwerk, Ziel-Teilnetzwerk, weiterzuleiten, wobei eine Filterung von Datenpaketen anhand der Paket-Kenner erfolgt, und die Filterung derart ist, dass für wenigstens eine der geschützten Verbindungen aus dem Quell-Teilnetzwerk gilt, dass von den zu dieser gehörigen Datenpaketen nur die für einen Teil nicht jedoch alle der zu dieser gehörenden Empfänger bestimmten Datenpakete in das Ziel-Teilnetzwerk weitergeleitet werden.

Die vorliegende Erfindung sieht mit anderen Worten eine Filterung der Daten am Übergang von einem Quell- zu einem Ziel-Teilnetzwerk anhand von in den Daten enthaltenen Paket-Kennern vor, dies besonders bevorzugt anhand von für ein Multiplexing eingeführter Streamlets, wie sie insbesondere in der ebenfalls auf die Anmelderin zurückgehenden EP 3 432 097 A1 beschrieben sind, und die Weiterleitung der Daten in einem neuen logischen Stream bzw. als ein neuer logischer Stream vor. Die erfindungsgemäße Vorgehensweise ermöglicht insbesondere die Übertragung von Daten von mehreren Streams als (ein) "abgeschwächter" Stream in leistungsschwächeren Teilnetzwerken, beispielsweise in solchen auf Feldebene einer industriellen (Automatisierungs-)Anlage. Durch die "Abschwächung" bzw. Reduktion der Datenmenge aufgrund der erfindungsgemäß vorgesehenen Filterung können Überlastsituationen insbesondere in leistungsschwächeren Teilen von Netzwerken zuverlässig verhindert werden. Dies vor allem in Szenarien, in denen mehrere Sender über jeweils eine geschützte Verbindung Datenpakete an mehrere Empfänger übertragen (wollen) und die Empfänger der geschützten Verbindungen jeweils auf verschiedene Teilnetzwerke, die in einer anderen hierarchischen Ebene liegen, verteilt sind.

Die Datenpakete sämtlicher der wenigstens zwei geschützten Verbindungen aus dem Quell-Teilnetzwerk, die in das Ziel-Teilnetzwerk weiterzuleiten sind, werden von dem das Quell- und Ziel-Teilnetzwerk verbindenden Koppel-Netzwerkknoten bevorzugt gemeinsam betrachtet.

Der eine gemeinsame Stream im Ziel-Teilnetzwerk stellt sozusagen einen zusammengeführten oder zusammengelegten Stream dar (englisch: "merged stream").

Es ist natürlich möglich, dass in einem Netzwerk in mehreren Teilnetzwerken jeweils zwei oder mehr geschützte Verbindungen eingerichtet sind, und jeweils ein Teil der Datenpakete dieser über einen Koppel-Netzwerkknoten in ein zweites Teilnetzwerk zu übertragen sind und dort über eine gemeinsame geschützte Verbindung übertragen werden. Dann findet durch mehrere Koppel-Netzwerkknoten eine Filterung und gemeinsame Betrachtung statt.

Auch ist es möglich, dass in einem Quell-Teilnetzwerk vier oder mehr geschützte Verbindungen eingerichtet sind, und in einem damit verbundenen Ziel-Teilnetzwerk zwei oder mehr gemeinsame geschützte Verbindungen ("merged streams") eingerichtet sind bzw. werden, wobei dann zweckmäßiger Weise jeweils einer der geschützten Verbindungen im Ziel-Teilnetzwerk wenigstens zwei (andere) der geschützten Verbindungen aus dem Quell-Teilnetzwerk zugeordnet sind und in diese zusammengeführt werden. Der Koppel-Netzwerkknoten betrachtet dann insbesondere die Datenpakete von jeweils zwei (oder mehr) anderen geschützten Verbindungen aus dem Quell-Netzwerk gemeinsam.

Bevorzugt unterscheiden sich die zu den wenigstens zwei in dem Quell-Teilnetzwerk eingerichteten geschützten Verbindungen gehörigen Sender, so dass über jede der wenigstens zwei geschützten Verbindungen von einem anderen Sender stammende Datenpakte übertragen werden. Alternativ oder zusätzlich unterscheiden sich die Empfänger der wenigstens zwei geschützten Verbindungen, wobei diese nur teilweise oder auch alle verschieden sein können.

Die Begriffe Quell- und Ziel-Teilnetzwerk sind nicht derart zu verstehen, dass die Sender der Datenpakete in dem Quell- und/oder die Empfänger der Datenpakete in dem Ziel-Teilnetzwerk liegen (müssen). Vielmehr kann es auch sein, dass die Sender und/oder die Empfänger in einem oder mehreren weiteren Teilnetzwerken liegen, und dass Quell-Teilnetzwerk lediglich den Sendern/Quellen und/oder das Ziel-Teilnetzwerk lediglich den Zielen/Empfängern näher liegt. Dann gilt insbesondere, dass die von den Sendern stammenden, an die Empfänger zu übermittelnden Datenpaket das Quell-Teilnetzwerk und/oder das Ziel-Teilnetzwerk lediglich passieren.

Geschützte Verbindungen können sich somit über das Quell- und das Ziel-Teilnetzwerk hinaus in gegebenenfalls vorhandene weitere Teilnetzwerke erstrecken.

Die Datenpakete können prinzipiell aus beliebig vielen geschützten Verbindungen, insbesondere Streams aus einem Quell-Teilnetzwerk stammen, beispielsweise von zwei, drei oder vier geschützten Verbindungen. Es ist auch möglich, dass die Summe der durch den Koppel-Netzwerkknoten gefilterten Daten größer als die einzelnen, ursprünglichen Streams wird. Die Stream-Reservierung des zugehörigen (einen) logischen Streams im Ziel-Teilnetzwerk kann entsprechend größer sein bzw. werden als alle ankommenden Streams mit Daten.

Ein Beispiel einer geschützten Verbindung ist ein Stream, wie er von der Audio/Video Bridging (AVB) Task Group und insbesondere von der Time-Sensitive Networking (TSN) Task Group in der internationalen Norm IEEE 802.1 festgelegt ist. Ein Stream kann zwischen genau einem Sender (Talker) und genau einem Empfänger (Listener) eingerichtet sein. Es ist auch bekannt, einen Stream zwischen einem einzelnen Talker und mehreren Listenern einzurichten. Dies entspricht dem Standard-Prinzip, wie es von der AVB Task Group und insbesondere von der TSN Task Group in der Norm IEEE 802.1 festgelegt ist. Darüber hinaus ist es auch möglich, einen Stream zwischen mehreren Talkern und einem einzelnen Listener einzurichten, wie es insbesondere in der ebenfalls auf die Anmelderin zurückgehenden europäischen Patentanmeldung mit der Anmeldenummer 18154319.0 beschrieben ist.

Eine geschützte Verbindung zeichnet sich insbesondere durch einen dieser zugeordneten eindeutigen Kenner, insbesondere einen Stream-Kenner bevorzugt in Form einer Stream-ID aus. Über Stream-Kenner können verschiedene geschützte Verbindungen, insbesondere Streams voneinander unterschieden werden.

Bei Netzwerkknoten kann es sich in hinlänglich bekannter Weise zum Beispiel um Bridges oder Switches handeln.

Bei dem erfindungsgemäßen Gerät handelt es sich bevorzugt um einen Netzwerkknoten, etwa eine Bridge oder einen Switch. Das erfindungsgemäße Gerät wird in einem Netzwerk insbesondere als Koppel-Netzwerkknoten verwendet, der zwei Teilnetzwerke, insbesondere ein Quell- und ein Ziel-Teilnetzwerk miteinander verbindet.

Die Teilnetzwerke bilden jeweils einen Teil bzw. einen Bereich des gesamten Netzwerkes. Alternativ zu dem Begriff "Teilnetzwerk" kann man auch von einem "Segment" eines Netzwerkes bzw. einem "Netzwerksegment" sprechen.

Die Einrichtung der geschützten Verbindungen in dem Quell-Teilnetzwerk und der gemeinsamen geschützten Verbindung in dem Ziel-Teilnetzwerk umfasst bevorzugt die Reservierung von Netzwerkressourcen an beteiligten Netzwerkknoten bzw. hat diese umfasst. Die Reservierung erfolgt bevorzugt unter Verwendung eines Reservierungsprotokolls bzw. ist bevorzugt unter Verwendung eines Reservierungsprotokolls erfolgt. Dies entspricht dem aus dem Stand der Technik vorbekannten Prinzip, wie es insbesondere von der AVB Task Group und insbesondere von der TSN Task Group in der Norm IEEE 802.1 festgelegt ist. Als Beispiel für ein geeignetes Reservierungsprotokoll sei das Stream Reservation Protocol (SRP) genannt.

Besonders bevorzugt ist das Quell-Teilnetzwerk leistungsfähiger als das Ziel-Teilnetzwerk. Alternativ oder zusätzlich handelt es sich bei dem Quell-Teilnetzwerk bevorzugt um ein Teilnetzwerk auf einer Maschinen-Ebene (englisch: machine level) einer industriellen Anlage, insbesondere Automatisierungs-Anlage, und/oder bei dem Ziel-Teilnetzwerk um ein Teilnetzwerk auf einer Feldebene (englisch: field level) einer industriellen Anlage, insbesondere Automatisierungs-Anlage.

Bei den Sendern handelt es sich bevorzugt um Steuerungen einer industriellen Anlage und/oder bei den Empfängern jeweils um ein IO-Gerät oder einen Sensor oder einen Aktor oder ein einen Sensor und/oder Aktor umfassendes Gerät.

Bezüglich der in den Datenpaketen enthaltenen Paket-Kenner gilt insbesondere, dass anhand dieser die Empfänger jeweils für sie bestimmte Datenpakete identifizieren können.

Die Filterung der Datenpakete durch den Koppel-Netzwerkknoten ist bevorzugt derart, dass für wenigstens eine bevorzugt alle der in dem Quell-Teilnetzwerk eingerichteten geschützten Verbindungen gilt, dass nur diejenigen Datenpakete dieser in das Ziel-Teilnetzwerk weitergeleitet werden, die für in dem Ziel-Teilnetzwerk oder einem oder mehreren dem Ziel-Teilnetzwerk unterlagerten weiteren Teilnetzwerken liegende Empfänger dieser bestimmt sind. Das erfindungsgemäße Gerät kann entsprechend ausgebildet und/oder eingerichtet sein. Diese Ausführungsformen sind besonders effizient, da die gewünschten bzw. benötigten Daten ausgewählt werden und der im dem (jeweiligen) Ziel-Teilnetzwerk entstehende Datenverkehr auf die tatsächlich benötigte Menge beschränkt wird.

In weiterer vorteilhafter Ausgestaltung des erfindungsgemäßen Verfahrens ist vorgesehen, dass den wenigstens zwei geschützten Verbindungen aus dem Quell-Teilnetzwerk und der gemeinsamen geschützten Verbindung aus dem Ziel-Teilnetzwerk jeweils ein Verbindungs-Kenner, insbesondere eine Stream-ID zugeordnet ist, und der Verbindungs-Kenner der gemeinsamen geschützten Verbindung aus dem Ziel-Teilnetzwerk sich von den Verbindungs-Kennern sämtlicher der wenigsten zwei geschützten Verbindungen aus dem Quell-Teilnetzwerk unterscheidet oder mit dem Verbindungs-Kenner einer der wenigsten zwei geschützten Verbindungen aus dem Quell-Teilnetzwerk übereinstimmt. Mit anderen Worten besteht sowohl die Möglichkeit, dass für die eine gemeinsame geschützte Verbindung in dem Ziel-Teilnetzwerk ein neuer Kennern insbesondere in Form einer Stream-ID verwendet wird, oder einer der Kenner der geschützten Verbindungen aus dem Quell-Teilnetzwerk auch für diese genutzt wird.

Die Weiterleitung der Streamdaten in dem neuen logischen Stream im Ziel-Teilnetzwerk kann entweder ohne Adressumsetzung mit den ursprünglichen Adressinformationen erfolgen, oder es kann für den Stream eine eigene Adresse im Ziel-Teilnetzwerk verwendet werden. Entsprechend kann in Weiterbildung vorgesehen sein, dass der Koppel-Netzwerkknoten in den Datenpaketen für deren Weiterleitung enthaltene Adressinformationen ändert, bevorzugt derart, dass sie Adressinformationen entsprechen, die der gemeinsamen geschützten Verbindung in dem Ziel-Teilnetzwerk zugeordnet sind. Das erfindungsgemäße Gerät ist in weiterer bevorzugter Ausgestaltung entsprechend ausgebildet und/oder eingerichtet.

Die Adressinformationen können in Form einer Stream-Adresse, etwa einer Stream Destination Adresse, abgekürzt Stream-DA, vorliegen oder eine solche umfassen. Für den Fall, dass keine Adressumsetzung vorgesehen ist, wird der Koppel-Netzwerkknoten die Adressinformationen, insbesondere einen in den Datenpaketen jeweils enthaltenen Adress-Kenner, nicht verändern. Die von dem Koppel-Netzwerkknoten weiterzuleitenden Datenpakete können in an sich bekannter Weise jeweils einen Datenbereich (auch als Payload bezeichnet) und bevorzugt einen dem Datenbereich voranstehenden Header aufweisen. Ist diese der Fall, ist der Paket-Kenner, anhand dem die Filterung durch den Koppel-Knoten erfolgt, bevorzugt jeweils in dem Datenbereich der Pakete enthalten. Das erfindungsgemäße Gerät ist entsprechend bevorzugt ausgebildet und/eingerichtet, um Datenpakete anhand des Paket-Kenners zu filtern, die jeweils einen Datenbereich und bevorzugt einen dem Datenbereich voranstehenden Header aufweisen, und bei denen der Paket-Kenner jeweils in dem Datenbereichen enthalten ist. Der Paket-Kenner kann sich beispielsweise jeweils direkt am Anfang oder auch am Ende des Datenbereiches befinden.

Eine weitere ganz besonders bevorzugte Ausführungsform zeichnet sich dadurch aus, dass die Datenpakete der wenigstens zwei geschützten Verbindungen aus dem Quell-Teilnetzwerk von dem Koppel-Netzwerkknoten koordiniert, insbesondere jeweils zeitversetzt in das Ziel-Teilnetzwerk weitergeleitet werden. Die koordinierte Weiterleitung der Datenpakete erfolgt besonders bevorzugt unter Verwendung eines gemeinsamen Weiterleitemechanimus, beispielsweise Shapers für die Weiterleitung. Das erfindungsgemäße Gerät kann entsprechend ausgebildet und/eingerichtet sein, um die Datenpakete aus dem Quell-Teilnetzwerk koordiniert, insbesondere jeweils zeitversetzt in das Ziel-Teilnetzwerk weiterzuleiten, und insbesondere, um die koordinierte Weiterleitung der Datenpakete durch Verwendung eines gemeinsamen Weiterleitemechansmus, beispielsweise Shapers für die Weiterleitung zu realisieren. Es hat sich als besonders geeignet erwiesen, für den Datenabfluss in das Ziel-Teilnetzwerk einen Weiterleitermechanismus etwa in Form eines Shapers zu verwenden. Der gemeinsame, entstehende logische Stream im Ziel-Teilnetzwerk kann von dem gemeinsamen Weiterleitemechanismus, etwa Shaper neu geformt und wieder gleichmäßig insbesondere gemäß der Klassenbeschreibung wie ein (einzelner) Stream übertragen werden.

Ein Shaper pro Stream kann durch die Identifizierung der Daten anhand IEEE 802.1 Qci mit dem Titel "Per-Stream Filtering and Policing" erfolgen.

Als Beispiele für geeignete Shaper bzw. Weiterleitemechanismen seien genannt der Credit Based Shaper (CBS, siehe IEEE 802.1 Qav), Cyclic Queuing and Forwarding (CQF, siehe IEEE 802.1 Qch) und Asynchronous Traffic Shaping (ATS, siehe IEEE 802.1 Qcr).

Insbesondere durch Verwendung eines gemeinsamen Weiterleitemechanismus/Shapers wird es möglich, im Ziel-Teilnetzwerk eine Reservierung mit geringerer Bandbreite als die Summe sämtlicher der wenigstens zwei geschützten Verbindungen durchzuführen.

Weiterhin kann vorgesehen sein, dass der Koppel-Netzwerkknoten denjenigen Datenpaketen der wenigstens zwei geschützten Verbindungen, die er in das Ziel-Teilnetzwerk weiterleitet, einen Weiterleite-Kenner, insbesondere eine Flow-ID zuordnet, wobei der Weiterleite-Kenner für alle diese Datenpakete gleich ist. Dann wird bevorzugt aufgrund des gemeinsamen Weiterleite-Kenners, insbesondere der gemeinsamen Flow-ID der gemeinsame Shaper für die Weiterleitung dieser Datenpakete verwendet bzw. kann verwendet werden. Das erfindungsgemäße Gerät ist in vorteilhafter Weiterbildung entsprechend ausgebildet und/oder eingerichtet. Die Verwendung einer Flow-ID hat sich als besonders geeignet erwiesen. Im Zusammenhang mit Flow-IDs sei auch auf IEEE802.1 Qci verwiesen.

Die Reservierung sollte zweckmäßiger Weise die entstehende Datenmenge in dem neuen, einen Stream im Ziel-Teilnetzwerk berücksichtigen. Entsprechend kann weiterhin vorgesehen sein, dass für die gemeinsame geschützte Verbindung in dem Ziel-Teilnetzwerk an beteiligten Netzwerkknoten ausreichend Ressourcen für eine geschützte Übertragung der von dem Koppel-Netzwerkknoten in das Ziel-Teilnetzwerk weitergeleiteten und/oder weiterzuleitenden Datenpakete reserviert sind oder werden.

Zweckmäßiger Weise wird die zusätzliche Verzögerung durch den Shaper in dem Koppel-Netzwerkknoten bei der Latenzbetrachtung berücksichtigt. Fast gleichzeitig ankommende Pakete (Streamlets) werden in dem Koppel-Netzwerkknoten durch den Shaper zusätzlich verzögert.

Ein weiterer Gegenstand der Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
- FIG 1: eine industrielles Netzwerk mir zwei hierarchischen Ebenen und zwei geschützten Verbindungen, wobei die beiden geschützten Verbindungen auch in dem mittleren Ziel-Teilnetzwerk eingerichtet sind und sämtliche Datenpakete dieser in das mittlere Ziel-Teilnetzwerk übertragen werden;
- FIG 2: das Netzwerk aus FIG 1, wobei in dem mittleren Ziel-Teilnetzwerk eine gemeinsame geschützte Verbindung eingerichtet ist, und nur ein Teil der Datenpakete beider geschützter Verbindungen weitergeleitet werden; und
- FIG 3: den Koppel-Netzwerkknoten des mittleren Teilnetzwerkes aus FIG 1 in vergrößerter Darstellung, zusammen mit den über beide geschützten Verbindungen ankommenden und den weitergeleiteten Datenpaketen.

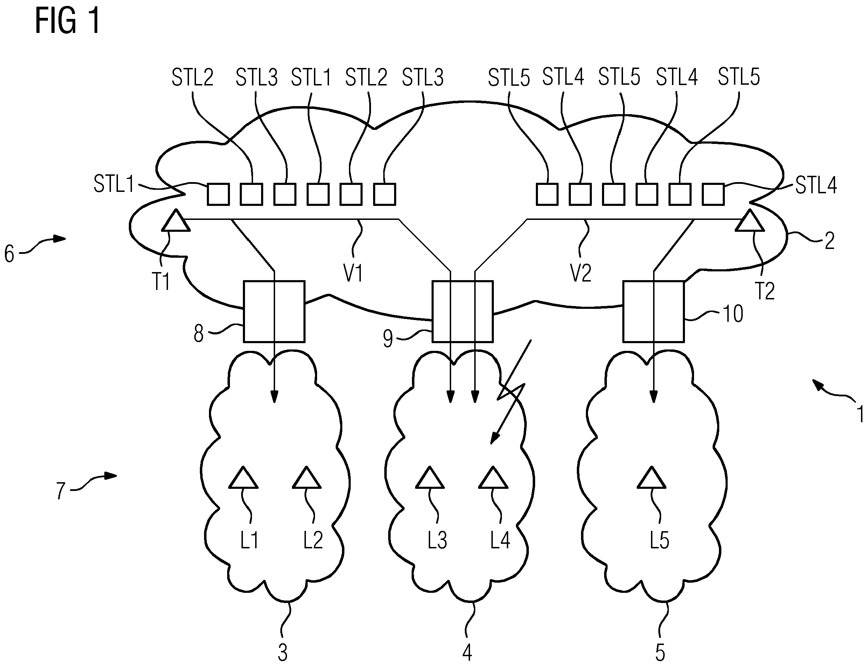

Die FIG 1 zeigt eine rein schematische Darstellung eines industriellen Kommunikationsnetzwerkes 1, welches der Datenkommunikation der Komponenten einer industriellen, technischen Anlage dient.

Von der Anlage sind in der FIG 1 nur insgesamt sieben Endgeräte T1, T2, L1-L5 gezeigt. Bei zwei dieser Endgeräte T1, T2 handelt es sich vorliegen um Steuerungen der Anlage, welche periodisch Steuerdaten an die weiteren Endgeräte L1-L5 zu übersenden haben, die jeweils einen Aktor umfassen bzw. durch einen solchen gebildet werden. Konkret soll von den Steuerung T1 an die Aktoren L1-L3 und von der Steuerung T2 an die Aktoren L4 und L5 gesendet werden. Die Aktoren L1-L5 wirken, wenn sie die Steuerdaten periodisch empfangen, in an sich bekannter Weise periodisch auf die Anlage bzw. einen in dieser ablaufenden Prozess ein. Die Datenübertragung zwischen den Steuerungen T1, T2 und den Aktoren bzw. den diese umfassenden Geräten L1-L5 ist entsprechend im Rahmen einer bzw. für eine Anwendung, welche der Steuerung der Anlage dient, erforderlich.

Die Steuerungen T1, T2, die jeweils einen Sender von Daten darstellt, sind Talker und die Aktoren bzw. diese umfassenden Endgeräte L1-L5, die jeweils Empfänger der Daten darstellen, sind Listener.

Wie man in der FIG 1 erkennt ist das Netzwerk 1 bei dem hier beschriebenen Ausführungsbeispiel in vier Teilnetzwerke 2-5 unterteilt, die auf zwei hierarchische Ebenen 6, 7 verteilt sind. Jedes der Teilnetzwerke in der FIG 1 ist rein schematisch durch eine Wolke angedeutet.

Die in FIG 1 obere Ebene 6 entspricht vorliegend dem Maschinen-Level der Anlage und die in FIG 1 untere Ebene dem FeldEbene, in welcher die Feldgeräte darstellenden Aktoren L1-L5 liegen. Dabei liegen die Aktoren L1 und L2 in dem Teilnetzwerk 3, die Aktoren L3 und L4 in dem Teilnetzwerk 4 und der Aktor L5 in dem Teilnetzwerk 5.

Aufgrund der Senderichtung von den Talkern T1, T2 aus dem Teilnetzwerk 2 auf Maschinen-Level 6 in die Teilnetzwerke 3-5 auf Feld-Level 7 wird das Teilnetzwerk 2 als Quell-Teilnetzwerk betrachtet und im Folgenden bezeichnet und werden die Teilnetzwerke 3-5 jeweils als Ziel-Teilnetzwerke betrachtet und im Folgenden bezeichnet.

Jeweils zwei Teilnetzwerke 2-5 sind vorliegend über einen Koppel-Netzwerkknoten 8-10 miteinander verbunden. Konkret ist jedes der drei Ziel-Teilnetzwerke 3-5 jeweils über einen Koppel-Netzwerkknoten 8-10 mit dem Quell-Teilnetzwerk 2 verbunden. Jeder der Koppel-Netzwerkknoten 8-10 ist vorliegend durch eine Bridge gegeben und bildete eine Edgebridge an den Teilnetzwerk-Übergängen.

Es versteht sich, dass in jedem der vier Teilnetzwerke 2-5 weitere Netzwerkknoten vorgesehen sein können bzw. vorgesehen sind, die in der FIG 1 nicht weiter dargestellt sind.

Um eine gesicherte Übertragung der Steuerdaten in Echtzeit, insbesondere mit garantierter Latenz zu ermöglichen, wie es für einen reibungsfreien Betrieb der Anlage wesentlich ist, soll die periodische Datenübertragung über geschützte Verbindungen, vorliegend als TSN-Streams erfolgen.

Aus dem Stand der Technik ist bekannt, dass hierzu zwischen dem jeweiligen Talker T1, T2 und den jeweiligen zugehörigen Listenern L1-L5 jeweils eine geschützte Verbindung, konkret ein TSN-Stream V1, V2 eingerichtet wird, wobei in diesem Zusammenhang auf die zugehörigen Standards, insbesondere IEEE 802.1 verwiesen sei. Dabei wird der jeweilige Stream V1, V2 zunächst von der jeweiligen, den Stream-Initiator darstellenden Steuerung T1, T2 angekündigt, wofür diese ein Ankündigungsnachricht, konkret einen Talker Advertise mit einer Streambeschreibung für den jeweiligen Stream V1, V2 herausgibt, die im Netzwerk 1 verteilt wird. Die Listener L1-L5 melden sich dann jeweils an einem der Streams V1, V2 an, indem sie Teilnahmenachrichten in Form von Listener Joins für den jeweiligen Stream V1, V2 senden, die an den jeweiligen Talker T1, T2, an dessen Stream V1, V2 sich der jeweilige Listener L1-L5 anmelden will, zurück übertragen werden. An den beteiligten Netzwerkknoten, die in der FIG 1, in welcher das Netzwerk 1 schematisch durch eine Wolke angedeutet ist, nicht separat zu erkennen sind, werden für jeden Stream V1, V2 die verfügbaren Ressourcen, u.a. die verfügbare Bandbreite geprüft und reserviert, sofern sie verfügbar sind. Nach erfolgreicher Reservierung kann die Weiterleitung für jeden Stream V1, V2 aktiviert werden und es werden zyklisch Stream-Datenpakete über die Streams S1, S2 an die Listener L1-L5 gesendet.

Jedem der beiden Streams V1, V2 ist ein Verbindungs-Kenner in Form einer Stream-ID zugeordnet, welche insbesondere in der Control-Plane für die Konfiguration bzw. Verwaltung genutzt wird. Es ist ferner jedem Stream V1, V2 eine Adresse, konkret eine sogenannte Stream Destination Address (Stream-DA) zugeordnet, welche insbesondere auf der Data-Plane für die Weiterleitung der Pakete genutzt wird.

In der ebenfalls auf die Anmelderin zurückgehenden EP 3 432 097 A1 ist beschrieben, dass Daten, die von einem Sender T1, T2 an mehrere Empfänger L1-L5 sowie von mehreren Sendern an einen Empfänger zu übertagen sind, über jeweils eine geschützte Verbindung, übertragen werden können.

Bei der Datenübertragung wird ein Multiplexing durchgeführt, wobei jeweils Datenpakete STL1-STL5 für die verschiedenen Empfänger L1-L5 über die gleiche geschützte Verbindung, konkret im gleichen Stream V1, V2 übertragen werden. Die für verschiedene Listener L1-L5 bestimmten, jeweils in einem Stream V1, V2 übertragenen Datenpakete/-frames eines Streams können dann auch als Streamlets STL1-STL2 betrachtet und bezeichnet werden. In der FIG 1 sind die für verschiedene Empfänger bestimmten Datenpakete bzw. Streamlets STL1-STL5, die zeitverzögert gesendet werden, rein schematisch dargestellt. Konkret sind die Streamlets STL1 für den Listener L1, die Streamlets STL2 für den Listener L2 usw. bestimmt.

Zur Identifikation des eigentlichen Empfängers bzw. durch den eigentlichen Empfänger L1-L5 ist zusätzlich ein Paket-Kenner in Form einer Streamlet-ID in den Streamlets STL1-STL5 enthalten. Dies kann z.B. bei PROFINET die Frame-ID sein. Bei Feldbussystemen existieren für die einzelnen Empfänger/Sender ohnehin meist eindeutige IDs, die dann als ID im Streamlet STL1-ST15 verwendet werden können. Die Streamlets STL1-STL5 umfassen jeweils in an sich bekannter Weise einen Datenbereich, dem ein Header vorangestellt ist. Die Streamlet-ID ist jeweils zu Beginn des Datenbereiches vorgesehen.

Vorliegend werden über den Stream V1 von dem Talker T1 die Streamlets STL1-STL3 für die Listener L1-L3 gesendet und von dem Talker T2 über den Stream V2 die Streamlets STL4 und STL5 für die Listener L4 und L5.

Durch die Sammlung von jeweils vielen Daten STL1-ST15 in einem Stream V1, V2 erfolgt eine deutlich effizientere Netzwerkauslastung im Vergleich zur Verwendung von einem Stream pro Gerät L1-L5 mit jeweils eigener Weiterleitung und Ressourcenreservierung aber nicht ausgenutzter Bandbreite.

Die Anmelderin geht davon aus, dass es bei dem Empfang von Daten, die in einem Teilnetzwerk 2 auf Maschinen-Level 6 (in der Regel höhere Linkspeed) innerhalb mehrerer Streams V1, V2 übertragen werden, um die Bandbreite besser ausnutzen zu können, bei der Reservierung im Field-Level 7 zu einem Ressourcenengpass kommt. In der FIG 1 ist dies durch einen Blitz angedeutet.

Bei dem hier beschriebenen Ausführungsbeispiel liegen in dem mittleren Ziel-Teilnetzwerk 4 Listener L3, L4 von beiden Streams V1, V2.

Für das Paar von Teilnetzwerken 2 und 4 gilt somit, dass in dem Quell-Teilnetzwerk 2 zwei geschützte Verbindungen V1, V2 eingerichtet sind, über die jeweils von einem Sender T1, T2 stammende und für mehrere Empfänger L3, L4 bestimmte Datenpakete STL3, STL4, die jeweils einem Empfänger zugeordnete Paket-Kenner, konkret Streamlet-IDS umfassen, anhand dem der jeweilige Empfänger L3, L4 für ihn bestimmte Datenpakete STL3, STL4 identifizieren kann, periodisch übertragen werden. Dabei liegt zumindest ein Teil der Empfänger jeder der zwei geschützten Verbindungen V1, V2 in dem Ziel-Teilnetzwerk 4, vorliegend der Listener L3 von dem Stream V1 du der Listener L4 von dem Stream V2.

Dies würde bei dem hier beschriebenen Szenario dazu führen, dass in dem mittleren Ziel-Teilnetzwerk 4 Reservierungen mit vergleichsweise hoher Bandbreite erforderlich wären und eine hohe Datenmenge in dieses zu übertragen wäre. Dies, obwohl die Streamlets STL1, STL2 und STL5 in dem Ziel-Teilnetzwerk 4 nicht benötigt werden.

Erfindungsgemäß ist daher vorgesehen, dass von dem Koppel-Netzwerkknoten 9, der das Quell-Teilnetzwerk 2 mit dem Ziel-Teilnetzwerk 4 verbindet, Datenpakete STL3, STL4 der zwei geschützten Verbindungen V1, V2 in das Ziel-Teilnetzwerk 4 weitergeleitet und in diesem über eine gemeinsame geschützte Verbindung V3 übertragen werden, wobei durch den Koppel-Netzwerkknoten 9 eine Filterung von Datenpaketen STL1-STL5 anhand der Paket-Kenner erfolgt, und die Filterung derart ist, dass für beide der geschützten Verbindungen V1, V2 gilt, dass von den jeweils zu dieser gehörigen Datenpaketen STL1-STL5 nur die für einen Teil nicht jedoch alle der zu dieser gehörenden Empfänger L1-L5 bestimmten Datenpakete STL1-STL5 weitergeleitet werden.

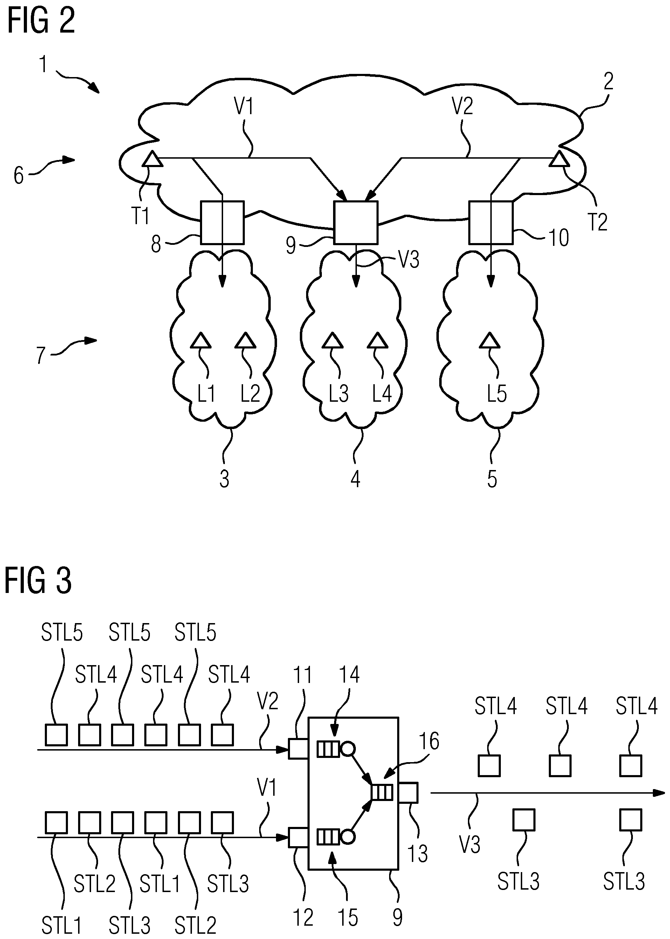

Dass in dem Ziel-Teilnetzwerk 4 - im Gegensatz zu der in FIG 1 gezeigten Situation - eine gemeinsame geschützte Verbindung V3 eingerichtet ist, ist in der FIG 2 dadurch angedeutet, dass nur ein Pfeil von dem Koppel-Netzwerkknoten 9 in das Ziel-Teilnetzwerk 4 zeigt.

Die Filterung ist konkret derart, dass nur diejenigen Datenpakete STL3, STL4 der zwei geschützten Verbindungen V1, V2 in das Ziel-Teilnetzwerk 4 weitergeleitet werden, die für die in dem Ziel-Teilnetzwerk 4 liegenden Empfänger, also L3 und L4, bestimmt sind.

Die benötigten, herausgefilterten Streamlets STL3, STL4 werden in einen logischen Stream V3 in dem Ziel-Teilnetzwerk 4 zusammengefasst. Es ist möglich, dass die Summe der durch den Koppel-Netzwerkknoten 9 gefilterten, in das Ziel-Teilnetzwerk 4 weiterzuleitenden Daten größer als die einzelnen, ursprünglichen Streams wird.

Die Filterung der Datenpakete/Streamlets STL1-STL5 ist rein schematisch in der FIG 3 dargestellt. Diese zeigt den Koppel-Netzwerkknoten 9, der das Quell- und das mittlere Ziel-Teilnetzwerk 2, 4 verbindet. Der durch eine Bridge gegebene Koppel-Netzwerkknoten 9 weist in hinlänglich vorbekannter Weise mehrere Ports auf, von denen in der FIG 3 nur insgesamt drei Stück 11-13 gezeigt sind. Die Ports 11 und 12 bilden für die gezeigte Übertragung Empfangs-, also Ingress-Ports und der Port 13 einen Sende-, also Egress-Port. Innerhalb des Koppel-Netzwerkknotens 9 ist die Queue 14 am Empfangs-Port 11, die Queue 15 am Empfangs-Port 12 und die Queue 16 am Sende-Port 13 schematisch angedeutet. Links des Koppel-Netzwerkknotens 9 sind die beiden an den Ports 11 und 12 ankommenden Streams V1 bzw. V2 aus dem Quell-Teilnetzwerk 2 (jeweils durch einen Pfeil angedeutet) mit den jeweils zu diesen gehörigen Streamlets STL1-STL3 bzw. STL4 und STL5 (jeweils oberhalb der Pfeile angedeutet) gezeigt. Rechts des Knotens 9 ist der gemeinsame logische Stream V3 im Ziel-Teilnetzwerk, erneut durch einen Pfeil, angedeutet. Zu diesem gehörige Streamlets STL3 und STL4 sind ebenfalls angedeutet, jeweils oberhalb bzw. unterhalb des Pfeils. Der eine gemeinsame Stream V3 im Teilnetzwerk 4 stellt sozusagen einen zusammengeführten oder zusammengelegten Stream dar (englisch: "merged stream").

Auch dem gemeinsamen Stream V3 ist ein Verbindungs-Kenner in Form einer Stream-ID zugeordnet. Die Stream-ID von V3 unterscheidet sich vorliegend sowohl von der Stream-ID von V1 als auch der Stream-ID von V2. Alternativ ist es möglich, dass diese mit der Stream-ID von V1 oder auch der von V2 übereinstimmt.

Vorliegend gilt, dass die Weiterleitung der Streamdaten STL3, STL4 in dem neuen logischen Stream V3 ohne Adressumsetzung, also mit den ursprünglichen Adressinformationen erfolgt. Der Koppel-Netzwerkknoten 9 ändert entsprechend in der Paketen STL3, STL4 enthaltene Adressinformationen nicht vor der Weiterleitung in das Ziel-Teilnetzwerk 4. Alternativ kann eine Adressumsetzung vorgesehen sein, also eine eigene Stream-Adresse für V3 im Ziel-Teilnetzwerk 4 verwendet werden.

Die Filterung der Streamlets STL1-STL5 erfolgt vorliegend anhand der Streamlet-IDs.

Die (herausgefilterten) Streamlets STL3, STL4 der beiden geschützten Verbindungen V1, V2 aus dem Quell-Teilnetzwerk 2 werden von dem Koppel-Netzwerkknoten 9 koordiniert, konkret jeweils zeitversetzt in das Ziel-Teilnetzwerk 4 weitergeleitet. Die koordinierte Weiterleitung der Streamlets STL3, STL4 der zwei geschützten Verbindungen V1, V2 aus dem Quell-Teilnetzwerk 2 in das Ziel-Teilnetzwerk 4 durch den Koppel-Netzwerkknoten 9 erfolgt, indem ein gemeinsamer Shaper für die Weiterleitung dieser Streamlets STL3, STL4 verwendet wird. Ein Shaper pro Stream kann durch Identifizierung der Daten anhand IEEE 802.1 Qci erfolgen.

Dabei wird jedem der herausgefilterten, weiterzuleitenden Streamlets STL3, STL4 der gleiche Weiterleite-Kenner vorliegend in Form einer für die Streamlets beider Verbindungen V1, V2 gemeinsamen Flow-ID zugeordnet und der gemeinsame Shaper für die Weiterleitung dieser Streamlets wird aufgrund der gemeinsamen Flow-ID verwendet bzw. kann aufgrund dieser verwendet werden.

Ferner gilt, dass für die gemeinsame geschützte Verbindung V3 in dem Ziel-Teilnetzwerk 4 an in diesem beteiligten Netzwercknoten ausreichend Ressourcen für eine geschützte Übertragung der aus sämtlichen der wenigstens zwei geschützten Verbindungen V1, V2 stammenden Datenpakete STL3, STL4, die von dem Koppel-Netzwerkknoten 9 in dieses Ziel-Teilnetzwerk 4 weitergeleitet werden, reserviert sind.

Da ein gemeinsamer Shaper verwendet wird, kann die Ressourcenbetrachtung im Ziel-Teilnetzwerk 4 weiterhin wie für einen Stream mit der neuen Datenmenge funktionieren.

Es sei angemerkt, dass die zusätzliche Verzögerung durch den Shaper in dem Koppel-Netzwerkknoten 9 bei der Latenzbetrachtung berücksichtigt wird. Der Effekt der Verzögerung durch den gemeinsamen Shaper entspricht einer In-Class Interference gemäß dem Stand der Technik, die bei einer gemeinsamen Weiterleitung von zuvor getrennten Streams allerdings ohne eine+ Filterung erfolgt. Bei der Stream Reservierung wird dies bei der Latenzberechnung beachtet. Der neue Stream hat dann eine zusätzliche Anfangs-Latenz, die auf das Maximum der beiden bisherigen Latenzen aufgerechnet wird und den lokalen Effekt der In-Class Interferenz als zusätzliche Latenz berücksichtigt.

Der Koppel-Netzwerkknoten 9 ist für die Durchführung des vorstehend beschriebenen Ausführungsbeispiels des erfindungsgemäßen Verfahrens ausgebildet und eingerichtet und stellt ein Ausführungsbeispiel eines erfindungsgemäßen Gerätes dar. Gleiches gilt bei dem hier beschriebenen Ausführungsbeispiel für die Koppel-Netzwerkknoten 8 und 10. So wird es möglich, dass auch durch diese eine Filterung und Zusammenführung von Datenpaketen aus zwei oder mehr verschiedenen geschützten Verbindungen im Quell-Netzwerk 2 erfolgen kann, wie es vorstehend im Zusammenhang mit dem Koppel-Netzwerkknoten 9 und dem mittleren Ziel-Teilnetzwerk 4 beschrieben wurde.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise ist es selbstverständlich möglich, dass in wenigstens ein weiteres Ziel-Teilnetzwerk, etwa das Ziel-Teilnetzwerk 3 und/oder das Ziel-Teilnetzwerk 5, ein Teil der Streamlets STL1-STL5 von den zwei in dem Quell-Teilnetzwerk 2 bestehenden geschützten Verbindungen V1, V2 weiterzuleiten ist. Dann filtern die Koppel-Netzwerkknoten 8 und/oder 9 anhand der Streamlet-ID die gewünschten Streamlets und es wird ein Shaper für diese verwendet, wie in der FIG 3 beispielhaft für den Koppel-Netzwerkknoten 9 gezeigt.

Selbstverständlich ist es weiterhin möglich, dass in dem Quell-Teilnetzwerk 2 beispielsweise noch zwei oder auch mehr weitere geschützte Verbindungen eingerichtet sind, und jeweils ein Teil der Streamlets dieser an zwei oder mehr Empfänger in dem Ziel-Teilnetzwerk 4 und/oder in wenigstens einem anderen Ziel-Teilnetzwerk weiterzuleiten sind. Dann erfolgt auch bezüglich der weiteren geschützten Verbindungen eine Filterung und bevorzugt Verwendung eines gemeinsamen Shapers an dem Koppel-Netzwerkknoten 9 und/oder anderen Koppel-Netzwerkknoten.

Weiterhin können die Datenpakete prinzipiell aus beliebig vielen geschützten Verbindungen aus einem Quell-Teilnetzwerk stammen, also keineswegs nur, wie in FIG 2 gezeigt, von zwei geschützten Verbindungen V1, V2 sondern beispielsweise auch von drei oder vier oder mehr geschützten Verbindungen.

Ferner versteht sich, dass die Listener L3, L4, für welche die Streamlets von V1 und V2 gefiltert und über die gemeinsame geschützte Verbindung V3 weitergeleitet werden, nicht zwingend in dem Ziel-Teilnetzwerk 4 liegen müssen, sondern sich auch in einem oder mehreren dem Ziel-Teilnetzwerk 4 (direkt oder über weitere Teilnetzwerke) unterlagerten weiteren Teilnetzwerken befinden könnten.

## Patentansprüche

1. Verfahren zur Datenübertragung in einem insbesondere industriellen Netzwerk (1), das in zwei oder mehr Teilnetzwerke (2-5), die auf zwei oder mehr hierarchische Ebenen (6, 7) des Netzwerkes (1) verteilt sind, unterteilt ist, wobei für wenigstens ein Paar von zwei in verschiedenen hierarchischen Ebenen (6, 7) liegenden Teilnetzwerken (2-5) gilt, dass diese über einen Koppel-Netzwerkknoten (8-10) verbunden sind, wobei in einem dieser beiden Teilnetzwerke, Quell-Teilnetzwerk (2), wenigstens zwei geschützte Verbindungen (V1, V2) eingerichtet sind, über die jeweils von einem Sender (T1, T2) stammende und für verschiedene Empfänger (L1-L5) bestimmte Datenpakete (STL1-STL5), die jeweils einen einem Empfänger (L1-L5) zugeordneten Paket-Kenner umfassen, periodisch übertragen werden, wobei von dem Koppel-Netzwerkknoten (8-10) Datenpakete (STL1-STL5) von wenigstens zwei der geschützten Verbindungen (V1, V2) in das Ziel-Teilnetzwerk (3-5) weitergeleitet und in diesem über eine gemeinsame geschützte Verbindung (V3) übertragen werden, wobei durch den Koppel-Netzwerkknoten (8-10) eine Filterung von Datenpaketen (STL1-STL5) anhand der Paket-Kenner erfolgt, und die Filterung derart ist, dass für wenigstens eine der geschützten Verbindungen (V1, V2) aus dem Quell-Teilnetzwerk (2) gilt, dass von den zu dieser gehörigen Datenpaketen (STL1-STL5) nur die für einen Teil nicht jedoch alle der zu dieser gehörenden Empfänger (L1-L5) bestimmten Datenpakete (STL1-STL5) in das Ziel-Teilnetzwerk (3-5) weitergeleitet werden.

2. Verfahren nach Anspruch 1,
**dadurch gekennzeichnet, dass** die Filterung derart ist, dass für wenigstens eine der geschützten Verbindungen (V1, V2) gilt, dass nur diejenigen Datenpakete (STL1-STL5) dieser in das Ziel-Teilnetzwerk (3-5) weitergeleitet werden, die für in dem Ziel-Teilnetzwerk (3-5) oder einem oder mehreren dem Ziel-Teilnetzwerk (3-5) unterlagerten weiteren Teilnetzwerken liegende Empfänger (L1-L5) dieser bestimmt sind.

3. Verfahren nach Anspruch 1 oder 2,
**dadurch gekennzeichnet, dass** den wenigstens zwei geschützten Verbindungen (V1, V2) aus dem Quell-Teilnetzwerk (2) und der gemeinsamen geschützten Verbindung (V3) aus dem Ziel-Teilnetz-werk (3-5) jeweils ein Verbindungs-Kenner, insbesondere eine Stream-ID zugeordnet ist, und der Verbindungs-Kenner der gemeinsamen geschützten Verbindung (V3) aus dem Ziel-Teilnetzwerk (3-5) sich von den Verbindungs-Kennern sämtlicher der wenigsten zwei geschützten Verbindungen (V1, V2) aus dem Quell-Teilnetzwerk (2) unterscheidet oder mit dem Verbindungs-Kenner einer der wenigsten zwei geschützten Verbindungen (V1, V2) aus dem Quell-Teilnetzwerk (2) übereinstimmt.

4. Verfahren nach einem der vorhergehenden Ansprüche,
**dadurch gekennzeichnet, dass** der Koppel-Netzwerkknoten (8-10) in den Datenpaketen (STL1-STL5) für deren Weiterleitung enthaltene Adressinformationen ändert, bevorzugt derart, dass sie Adressinformationen entsprechen, die der gemeinsamen geschützten Verbindung (V3) in dem Ziel-Teilnetzwerk (3-5) zugeordnet sind.

5. Verfahren nach einem der vorhergehenden Ansprüche,
**dadurch gekennzeichnet, dass** die Datenpakete (STL1-STL5) jeweils einen Datenbereich und bevorzugt einen dem Datenbereich voranstehenden Header aufweisen, und die Paket-Kenner, anhand derer die Filterung durch den Koppel-Netzwerkknoten (8-10) erfolgt, jeweils in den Datenbereichen der Datenpakete (STL1-STL5) enthalten sind.

6. Verfahren nach einem der vorhergehenden Ansprüche,
**dadurch gekennzeichnet, dass** die Datenpakete (STL1-STL5) der wenigstens zwei geschützten Verbindungen (V1, V2) aus dem Quell-Teilnetzwerk (2) von dem Koppel-Netzwerkknoten (8-10) koordiniert, insbesondere jeweils zeitversetzt in das Ziel-Teilnetzwerk (3-5) weitergeleitet werden, wobei die koordinierte Weiterleitung der Datenpakete (STL1-STL5) bevorzugt unter Verwendung eines gemeinsamen Weiterleitemechanismus für die Weiterleitung erfolgt.

7. Verfahren nach Anspruch 6,
**dadurch gekennzeichnet, dass** der Koppel-Netzwerkknoten (8-10) denjenigen Datenpaketen (STL1-STL5) der wenigstens zwei geschützten Verbindungen (V1, V2), die er in das Ziel-Teilnetzwerk (3-5) weiterleitet einen Weiterleite-Kenner zuordnet, wobei der Weiterleite-Kenner für alle diese Datenpakete (STL1-STL5) gleich ist.

8. Verfahren nach einem der vorhergehenden Ansprüche,
**dadurch gekennzeichnet, dass** für die gemeinsame geschützte Verbindung (V3) in dem Ziel-Teilnetzwerk (3-5) an beteiligten Netzwerkknoten ausreichend Ressourcen für eine geschützte Übertragung der von dem Koppel-Netzwerkknoten (8-10) in das Ziel-Teilnetzwerk (3-5) weitergeleiteten und/oder weiterzuleitenden Datenpakete (STL1-STL5) reserviert sind oder werden.

9. Verfahren nach Anspruch 6 oder 7 und 8,
**dadurch gekennzeichnet, dass** die zusätzliche Verzögerung durch den Shaper in dem Koppel-Netzwerkknoten (8-10) bei der Latenzbetrachtung berücksichtigt wird.

10. Gerät (8-10) zur Durchführung des Verfahrens nach einem der vorhergehenden Ansprüche, das ausgebildet und/oder eingerichtet ist, um zwei Teilnetzwerke (2-5) miteinander zu verbinden und um Datenpakete (STL1-STL5), die über wenigstens zwei in dem einen Teilnetzwerk, Quell-Teilnetzwerk (2), eingerichtete geschützte Verbindungen (v1, V2) an dem Gerät (8-10) ankommen, und die jeweils einen Paket-Kenner umfassen, zu empfangen, und um empfangene Datenpakete (STL1-STL5) der wenigstens zwei geschützten Verbindungen (V1-V2) in das andere Teilnetzwerk, Ziel-Teilnetzwerk (3-5), weiterzuleiten, wobei eine Filterung von Datenpaketen (STL1-STL5) anhand der Paket-Kenner erfolgt, und die Filterung derart ist, dass für wenigstens eine der geschützten Verbindungen (V1, V2) aus dem Quell-Teilnetzwerk (2) gilt, dass von den zu dieser gehörigen Datenpaketen (STL1-STL5) nur die für einen Teil nicht jedoch alle der zu dieser gehörenden Empfänger (L1-L5) bestimmten Datenpakete (STL1-STL5) in das Ziel-Teilnetzwerk (3-5) weitergeleitet werden.

11. Gerät (8-10) nach Anspruch 10,
**dadurch gekennzeichnet, dass** das Gerät (8-10) ausgebildet und/eingerichtet ist, um die Filterung derart durchzuführen, dass nur diejenigen Datenpakete (STL1-STL5) der wenigstens zwei geschützten Verbindungen (V1, V2) in das Ziel-Teilnetzwerk (3-5) weitergeleitet werden, die für die in dem Ziel-Teilnetzwerk oder einem oder mehreren dem Ziel-Teilnetzwerk (3-5) unterlagerten weiteren Teilnetzwerken liegenden Empfänger (L1-L5) bestimmt sind.

12. Gerät (8-10) nach Anspruch 10 oder 11,
**dadurch gekennzeichnet, dass** das Gerät (8-10) ausgebildet und/eingerichtet ist, um in den Datenpaketen (STL1-STL5) für deren Weiterleitung enthaltene Adressinformationen zu ändern, bevorzugt derart, dass sie Adressinformationen entsprechen, die der gemeinsamen geschützten Verbindung (V3) in dem Ziel-Teilnetzwerk (3-5) zugeordnet sind.

13. Gerät (8-10) nach einem der Ansprüche 10 bis 12,
**dadurch gekennzeichnet, dass** das Gerät (8-10) ausgebildet und/eingerichtet ist, um Datenpakete (STL1-STL5) anhand des Paket-Kenners zu filtern, die jeweils einen Datenbereich und bevorzugt einen dem Datenbereich voranstehenden Header aufweisen, und bei denen der Paket-Kenner jeweils in dem Datenbereich enthalten ist.

14. Gerät (8-10) nach einem der Ansprüche 10 bis 13,
**dadurch gekennzeichnet, dass** das Gerät (8-10) ausgebildet und/eingerichtet ist, um die Datenpakete (STL1-STL5) aus dem Quell-Teilnetzwerk (2) koordiniert, insbesondere jeweils zeitversetzt in das Ziel-Teilnetzwerk (3-5) weiterzuleiten, und insbesondere, um die koordinierte Weiterleitung der Datenpakete (STL1-STL5) durch Verwendung eines gemeinsamen Weiterleitemechanismus für die Weiterleitung zu realisieren.

15. Gerät (8-10) nach Anspruch 14,
**dadurch gekennzeichnet, dass** das Gerät (8-10) ausgebildet und/eingerichtet ist, um denjenigen Datenpaketen (STL1-STL5) der wenigstens zwei geschützten Verbindungen (V1, V2) aus dem Quell-Teilnetzwerk (2), die es weiterleitet, den gleichen Weiterleite-Kenner zuzuordnen.

16. Computerprogramm umfassend Programmcode-Mittel zur Durchführung des Verfahrens nach einem der Ansprüche 1 bis 9.

17. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 9 durchzuführen.
